# FASCICULE DE BREVET EUROPEEN

(11) **EP 0 886 804 B1**
(45) Date de publication et mention de la délivrance du brevet: **21.11.2001**
(21) Numéro de dépôt: 97906069.6
(22) Date de dépôt: 13.03.1997
(51) Int. Cl.: G02F 1/15

(54) **DISPOSITIF ELECTROCHROME OU PHOTOELECTROCHROME**
ELEKTROCHROME ODER PHOTOELEKTROCHROME VORRICHTUNG
ELECTROCHROMIC OR PHOTOELECTROCHROMIC DEVICE

(30) Priorité: 15.03.1996 CH 71296
(43) Date de publication de la demande: 30.12.1998
(73) Titulaire: ECOLE POLYTECHNIQUE FEDERALE DE LAUSANNE (EPFL), 1015 Lausanne (CH)
(72) Inventeur: BONHOTE, Pierre, CH-2000 Neuchâtel (CH); WALDER, Lorenz, D-49078 Osnabrück (DE); GRÄTZEL, Michael, CH-1025 Saint-Sulpice (CH)
(74) Mandataire: Ganguillet, Cyril
(86) Numéro de dépôt international: CH9700104
(87) Numéro de publication internationale: WO9735227

(56) Documents cités:
- OPTICAL MATERIALS TECHNOLOGY FOR ENERGY EFFICIENCY AND SOLAR ENERGY CONVERSION XIV, SAN DIEGO, CA, USA, 12-13 JULY 1995, vol. 2531, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, pages 60-69, XP000671702 HAGFELDT A ET AL: "Nanostructured TiO/sub 2/ semiconductor electrodes modified with surface attached viologens: applications for displays and smart windows"
- SOLAR ENERGY MATERIALS AND SOLAR CELLS, MARCH 1994, NETHERLANDS, vol. 32, no. 3, ISSN 0927-0248, pages 307-321, XP000429673 LAMPERT C M: "Towards large-area photovoltaic nanocells: experiences learned from smart window technology"
- SOLAR ENERGY MATERIALS AND SOLAR CELLS, vol. 25, no. 3/04, 1 Février 1992, pages 349-359, XP000265331 NAOYA KASHIWAZAKI: "NEW COMPLEMENTARY ELECTROCHROMIC DISPLAY UTILIZING POLYMERIC YBPC2 AND PRUSSIAN BLUE FILMS"
- OPTICAL MATERIALS TECHNOLOGY FOR ENERGY EFFICIENCY AND SOLAR ENERGY CONVERSION XIV, SAN DIEGO, CA, USA, 12-13 JULY 1995, vol. 2531, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, pages 220-227, XP000674997 HUGOT-LE GOFF A ET AL: "Study by Raman spectroscopy of the adsorption of Ru-bi and ter pyridinium complexes on nanocrystalline TiO/sub 2/ during photoelectrochemical experiments"

## Description

Dans le but de réaliser un dispositif électrochrome où le changement d'absorption de lumière visible soit supérieur à 90% (par exemple de 5 à 95%) et qui utilise des molécules comme unités électrochromes, il est nécessaire d'atteindre des densités de surface Γ > 5 x 10⁻⁸ mol/cm² si le coefficient d'extinction de ces molécules varie de Δε = 20'000 par changement d'état d'oxydation. Jusqu'à présent, cette exigence a été atteinte comme suit pour la réalisation de dispositifs électrochromes:
- le composé électrochrome est présent en solution au contact de l'électrode. La condition est remplie avec une concentration de 0,25 M et une épaisseur de la couche de solution de 2 µm;
- le composé électrochrome est précipité électrochimiquement en couche mince sur une électrode;
- le composé électrochrome est polymérisé ou incorporé à un film de polymère ou de matériau composite sur la surface. Un tel dispositif est décrit par Naoya Kashiwazaki dans "Solar Energy Materials and Solar Cells, 25 (1992) 349-359. Dans ce dispositif un film de YbPc₂ polymérisé est déposé par un procédé plasmochimique à la surface d'un verre ITO. Ce film est de couleur bleue, verte ou rouge selon le degré d'oxydation.

Des électrodes comprenant un matériau semi-conducteur nanocristallin TiO₂ modifié par un viologène fixé à la surface du matériau ont été décrites par A. Hagfeldt, L. Walder et M. Grätzel dans SPIE Proceedings Volume 2531, pages 61 à 68.

Nous décrivons ici un type nouveau de dispositifs électrochromes et photoélectrochromes qui utilisent pour atteindre les performances décrites plus haut, des électrodes de semi-conducteur nanocristallin de très haute surface spécifique à la surface desquelles sont adsorbées des molécules électrochromes. Ces dispositifs sont rapides, avec des temps de commutation inférieurs à 3 s pour un changement d'absorption de 90% au moins et permettent d'obtenir des colorations vives.

### Exposé de l'invention

L'invention concerne des systèmes électrochimiques comportant au moins deux électrodes, chacune pouvant être transparente ou opaque et dont une au moins change de couleur en fonction de
I. la tension appliquée entre les deux électrodes par une source de courant-tension;
II. l'intensité de la lumière à laquelle est exposé le système;
III. l'influence combinée de I. et II.

De plus, le changement de couleur engendré par la lumière peut être
A. local: seul l'endroit illuminé change de couleur;
B. global: tout le système change de couleur indépendamment de la localisation de l'illumination.

De plus, le changement de couleur engendré par la tension extérieure peut être
a. global: tout le système change de couleur;
b. local: seul l'endroit adressé électriquement change de couleur (surface de l'électrode structurée).

Il en résulte les applications suivantes:
I-a: des systèmes électrochromes réversibles pour contrôler la transmission de la lumière, pilotés par une source de tension-courant extérieure;
I-b: des systèmes électrochromes pour l'affichage réversible d'information, pilotés par une source de tension-courant extérieure;
III-A: des systèmes photoélectrochromes réversibles pour l'écriture optique et le stockage réversible d'informations, contrôlés par un faisceau de lumière (écriture) et par une source de tension-courant extérieure (stockage et effaçage);
II-B: des systèmes (filtres, vitrages) dont la transmission s'adapte automatiquement à l'intensité de la lumière reçue.

Tous ces changements de couleur, faciles à observer à l'oeil nu sauf dans le cas III-A lors du stockage d'information à l'échelle micrométrique et sub-micrométrique, correspondent à des réactions chimiques bien définies sur le plan moléculaire, à savoir des oxydations ou réductions d'un composé électrochrome en général greffé sur la totalité de la surface d'une électrode de semi-conducteur nanocristallin accessible à de telles molécules. Une telle électrode est préparée par procédé sol-gel tel que décrit en détail par Stalder et Augustynski dans *J. Electrochem. Soc.* 1979, *126,* 2007, en maintenant l'humidité relative de l'air ambiant à une valeur comprise entre 50 et 80%, sans variation de plus de 5%, durant l'hydrolyse de l'alcoolate du métal dont on prépare l'oxyde. L'épaisseur de la couche nanocristalline est comprise entre 0,1 et 10 µm ou plus, lui conférant un facteur de rugosité compris entre environ 10 et 1000, par exemple 700, ce qui signifie que la surface de l'électrode accessible à des molécules d'un diamètre typique de 1 nm vaut 10 à 1000 fois la surface projetée de la couche, par exemple 700 fois. Il en résulte que tout changement des propriétés optiques d'une couche de molécules adsorbées à la surface du semi-conducteur engendre des effets macroscopiques amplifiés par le facteur de rugosité. Ainsi, l'absorption de lumière par une monocouche de molécules colorées est plus forte d'un facteur égal au facteur de rugosité sur une électrode nanocristalline que sur une surface plane.

Les semi-conducteurs particulièrement indiqués pour la réalisation des électrodes nanocristallines doivent posséder une large bande interdite. Ils peuvent être choisis parmi les oxydes d'éléments du groupe IV du système périodique, par exemple le titane, le zirconium ou le hafnium, du groupe V, par exemple le vanadium, le niobium ou le tantale, du groupe VI, par exemple le chrome, le molybdène ou le tungstène, ou d'autres groupes, par exemple l'argent, le zinc, le strontium, le fer ou le nickel. Ils peuvent également être du type perovskite, tels SrTiO₃ ou CaTiO₃.

En particulier l'invention concerne un dispositif électrochrome ou photoélectrochrome tel qu'il est décrit dans l'une des revendications 1 et 2.

On peut notamment envisager des formes d'exécution présentant l'une ou plusieurs des particularités suivantes:
a. le semi-conducteur est un oxyde de titane, de zirconium, de hafnium, de vanadium, de niobium, de tantale, de molybdène, de tungstène, de zinc, de strontium, de fer, de nickel, d'argent ou une perovskite desdits métaux;
b. le circuit électrique comprend une source de courant-tension;
c. le dispositif comporte une petite électrode auxiliaire en plus de l'anode et de la cathode;

On peut réaliser notamment diverses variantes d'exécution du dispositif électrochrome dont certaines font partie de l'invention telle que revendiquée, chacune de ces variantes présentant des particularités selon l'un des points suivants:
1. variante où la cathode porte une monocouche adsorbée d'au moins un type de molécules électrochromophores qui comprennent au moins un groupe d'attache adsorbable, éventuellement un groupe polymérisable ou condensable et au moins un groupe électrochromophore type n dont la propriété est d'être incolore à l'état oxydé et coloré à l'état réduit, le composé électroactif auxiliaire étant fixé à l'anode sous forme d'un revêtement électroactif, la solution électrolytique entre les électrodes contenant au moins un sel électrochimiquement inerte en solution dans un solvant;
2. variante selon le point 1, où les molécules électrochromophores comprennent, comme groupe électrochromophore le N,N'-dialkylbipyridinium ou la diimide de l'acide naphtalènetetracarboxylique-1,4,5,8;
3. variante selon le point 1, où les molécules électrochromophores comprennent comme groupe d'attache le groupe carboxylate, salicylate, catécholate ou phosphonate et, éventuellement, comme groupe polymérisable, le groupe vinyle ou pyrrole ou comme groupe condensable, le groupe alcool ou amine;
4. variante selon le point 1, où la cathode et l'anode sont transparentes;
5. variante selon le point 1, où un écran réfléchissant est placé derrière la cathode et le système est donc opaque;
6. variante selon le point 5, où l'écran réfléchissant est constitué d'une couche de semi-conducteur réalisée comme indiqué au point a ci-dessus, microcristallin, déposé sur la face de la cathode intérieure au système;
7. variante selon le point 6, où l'anode est une plaque de métal;
8. variante selon le point 7, où ledit métal est le zinc;
9. variante selon le point 1, où ledit revêtement électroactif est constitué d'une couche dense déposée électrochimiquement;
10. variante selon le point 9, où cette couche dense est le bleu de Prusse réduit ("blanc de Prusse", poly-ferrocyanure de fer (II));
11. variante selon le point 9, où cette couche dense est un polymère organique électroactif;
12. variante selon le point 9, où cette couche dense est un matériau composite comprenant un matériau électroactif;
13. variante selon le point 1, où le revêtement électroactif est constitué d'une couche nanocristalline de semi-conducteur, dont le facteur de rugosité est supérieur à 20, à la surface duquel est adsorbée une monocouche de molécules électroactives ou un polymère électroactif;
14. variante selon le point 13, où les molécules électroactives sont des molécules électrochromophores comprenant un groupe d'attache adsorbable, éventuellement un groupe polymérisable ou condensable et un groupe électrochromophore type p dont la propriété est d'être incolore à l'état réduit et coloré à l'état oxydé;
15. variante selon le point 14, où lesdites molécules électrochromophores comprennent des groupes d'attache et groupe polymérisable selon le point 3;
16. variante selon le point 7, où la solution électrolytique contient également un sel du métal dont est constituée l'anode;
17. variante selon le point 1, où ledit solvant est un sel liquide électrochimiquement inerte;
18. variante selon le point 17, où ledit sel liquide est le trifluorométhanesulfonate ou le bis-trifluorométhylsulfonylamidure d'éthyl-1 méthyl-3 imidazolium ou de propyl-1 diméthyl-2,3 imidazolium;
19. variante selon le point 1, où ledit solvant est l'acétonitrile, le butyronitrile, le glutaronitrile, le méthoxypropionitrile, le diméthylsulfoxyde, le sulfolane, la diméthylformamide, la diméthylacétamide, la N-méthyloxazolidinone, la diméthyl-tetrahydro pyrimidinone (DMPU);
20. variante selon le point 1, où ledit ou lesdits sels électrochimiquement inertes sont choisis parmi les hexafluorophosphate, trifluorométhanesulfonate, bis-trifluorométhylsulfonylamidure ou perchlorate de tetraalkylammonium, de dialkyl-1,3 imidazolium ou de lithium;

De même, on peut réaliser notamment diverses variantes d'exécution du dispositif photoélectrochrome dont certaines font partie de l'invention telle que revendiquée, chacune de ces variantes présentant des particularités selon l'un des points suivants:
21. variante où la coloration du dispositif s'adapte automatiquement à l'intensité lumineuse;
22. variante selon le point 21, où l'anode porte une couche nanocristalline de semi-conducteur, selon le point a ci-dessus, dont le facteur de rugosité est supérieur à 20, à la surface duquel est adsorbée une monocouche de sensibilisateur comprenant un groupe chromophore, un groupe d'attache adsorbable, éventuellement un groupe polymérisable ou condensable;
23. variante selon le point 21, où l'anode porte une couche nanocristalline de semi-conducteur, selon le point a ci-dessus, dont le facteur de rugosité est supérieur à 20, à la surface duquel est adsorbée une monocouche de molécules électrochromophores comprenant un groupe d'attache adsorbable, un groupe électrochromophore type p dont la propriété est d'être incolore à l'état réduit et coloré à l'état oxydé et éventuellement un groupe polymérisable ou condensable;
24. variante selon le point 21, où l'anode porte une couche nanocristalline de semi-conducteur, selon le points a ci-dessus, dont le facteur de rugosité est supérieur à 20, dépourvue de molécules adsorbées;
25. variante selon le point 22, où ledit sensibilisateur comprend un groupe électrochromophore type p lié au chromophore dont la propriété est d'être incolore à l'état réduit et coloré à l'état oxydé;
26. variante selon le point 22, où ledit sensibilisateur et lesdites molécules électrochromophores sont coadsorbés sur l'anode, dans des proportions de 1 à 1, de 1 à 2, ou de 1 à 5 ou plus;
27. variante selon le point 21, où la cathode porte une couche nanocristalline de semi-conducteur, selon le point a ci-dessus, dont le facteur de rugosité est supérieur à 20, à la surface duquel est adsorbée une monocouche d'au moins un type de molécules électrochromophores qui comprennent au moins un groupe d'attache adsorbable, au moins un groupe électrochromophore type n dont la propriété est d'être incolore à l'état oxydé et coloré à l'état réduit et éventuellement un groupe polymérisable ou condensable;
28. variante selon le point 21, où la cathode ne porte pas de couche nanocristalline de semi-conducteur;
29. variante selon le point 21, où ledit composé électroactif auxiliaire est un sel électrochimiquement actif capable de transporter les électrons entre cathode et anode, dissous dans ladite solution;
30. variante selon le point 21, où ledit composé électroactif auxiliaire est un groupe électrochromophore type p lié au chromophore selon le point 25, et où ladite solution ne contient que des sels électrochimiquement inactifs;
31. variante selon le point 29, où ledit sel électrochimiquement actif est un électrochromophore en solution type p ou type n;
32. variante selon les points 22, 23 et 27, où lesdites molécules électrochromophores comprennent des groupes d'attache et groupes polymérisables selon le point 3;
33. variante selon le point 21, s'adaptant avantageusement à la lumière visible, où la cathode est réalisée selon le point 27 et où l'anode est réalisée selon le point 22;
34. variante selon le point 33, s'adaptant avantageusement à la lumière visible, réalisée selon le point 29;
35. variante selon le point 33, s'adaptant avantageusement à la lumière visible, réalisée selon le point 31, où ledit électrochromophore en solution est de type P;
36. variante selon le point 21, s'adaptant avantageusement à la lumière visible, où la cathode est réalisée selon le point 27 et où ladite solution est réalisée selon le point 29;
37. variante selon le point 36, s'adaptant avantageusement à la lumière visible, où l'anode est réalisée selon le point 25;
38. variante selon le point 36, s'adaptant avantageusement à la lumière visible, où l'anode est réalisée selon le point 26;
39. variante selon le point 21, s'adaptant avantageusement à l'ultraviolet, où la cathode est réalisée selon le point 27, où l'anode est réalisée selon le point 23 et où ladite solution est réalisée selon le point 29;
40. variante selon le point 21, s'adaptant avantageusement à l'ultraviolet, où la cathode est réalisée selon le point 27 et où ladite solution est réalisée selon le point 29;
41. variante selon le point 21, s'adaptant avantageusement à l'ultraviolet, où la cathode est réalisée selon le point 28, où l'anode est réalisée selon le point 23 ci-dessus et où ledit électrochromophore en solution est de type p;
42. variante selon le point 21, s'adaptant avantageusement à l'ultraviolet, où la cathode est réalisée selon le point 28 et où ladite solution est réalisée selon le point 31 où ledit électrochromophore en solution est de type p;
43. variante selon le point 21, utilisable avantageusement pour le stockage d'information réversible, où la cathode est réalisée selon le point 27, et où ladite solution est réalisée selon le point 30;
44. variante selon le point 21, utilisable avantageusement pour le stockage d'information réversible, où ladite solution est réalisée selon le point 30 et où un écran réfléchissant est placé derrière l'anode;
45. variante selon le point 44, où l'écran réfléchissant est constitué d'une couche de semi-conducteur microcristallin selon le point a ci-dessus, déposé sur la face de l'anode intérieure au système;
46. variante selon le point 21, utilisable avantageusement pour le stockage d'information réversible, où ladite solution est réalisée selon le point 30 et où la cathode est constituée d'une couche dense de matériau électroactif réversiblement réductible déposée sur une couche de verre ou de plastique conducteur;
47. variante selon le point 46, utilisable avantageusement pour le stockage d'information réversible, où cette couche dense est un polymère organique électroactif ou un matériau composite comprenant un matériau électroactif;
48. variante selon les points 43 à 47, utilisable avantageusement pour le stockage d'information réagissant à la lumière visible, où l'anode est réalisée selon le point 22;
49. variante selon les points 43 à 47, utilisable avantageusement pour le stockage d'information réagissant à la lumière visible, où l'anode est réalisée selon le point 25;
50. variante selon les points 43 à 47, utilisable avantageusement pour le stockage d'information réagissant à la lumière visible, où l'anode est réalisée selon le point 26;
51. variante selon les points 43 à 47, utilisable avantageusement pour le stockage d'information réagissant à l'ultraviolet, où l'anode est réalisée selon le point 23;
52. variante selon le point 21, où ledit solvant est un sel liquide électrochimiquement inerte, selon le point 18, ou autre liquide, selon le point 19;
53. variante selon le point 21, où l'un des électrolytes, électrochimiquement inactif, est choisi selon le point 20;

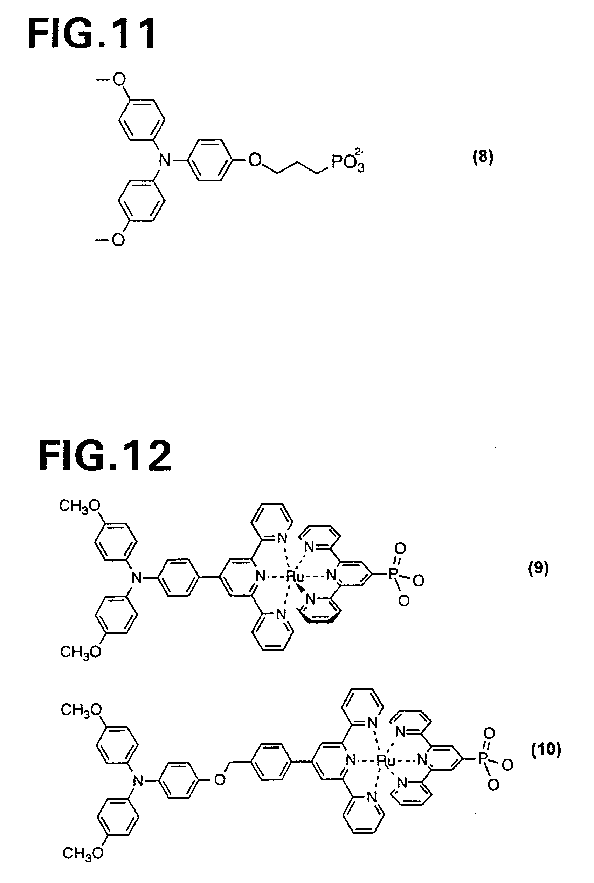

Les composés électrochromophores et sensibilisateurs suivants sont également considérés:
54. composé électrochromophore de type n selon le point 1 formés d'un ou plusieurs groupes viologène (dialkyl-4,4' bipyridinium) liés par une ou plusieurs chaînes alkyle pouvant inclure un ou plusieurs groupes phénylène et terminées par un groupe phosphonate, salicylate ou catécholate;
55. composé électrochromophore de type n selon le point 54 comprenant encore un groupe pyrrole, thiophène, vinyle, alcool ou amine;
56. composé électrochromophore de type n selon le point 1 formés d'un ou plusieurs groupes diimide de l'acide naphtalènetetracarboxylique-1,4,5,8 liés par une ou plusieurs ou plusieurs chaînes alkyle pouvant inclure un ou plusieurs groupes phénylène et terminées par un groupe phosphonate, salicylate ou catécholate;
57. composé électrochromophore de type n selon le point 56 comprenant encore un groupe pyrrole, thiophène, vinyle, alcool ou amine;
58. composé électrochromophore de type n selon les points 54 à 57 tels que représentés dans les structures ci-dessous;
59. composé électrochromophore de type p selon le point 14, formés d'un ou plusieurs groupes triarylamine liés par une ou plusieurs chaînes alkyle pouvant inclure un ou plusieurs groupes phénylène et terminées par un groupe phosphonate, salicylate ou catécholate;
60. composé électrochromophore de type p selon le point 59 comprenant encore un groupe pyrrole, thiophène, vinyle, alcool ou amine;
61. composé électrochromophore de type p selon les points 59 et 60 tels que représentés par la molécule (8) de la figure 11;
62. composé sensibilisateur auxquels sont liés un ou plusieurs groupes électrochromophores de type p, selon le point 25 et dont le sensibilisateur est un complexe de ruthénium comprenant des ligands polypyridine dont un au moins possède un ou plusieurs groupes phosphonate, carboxylate, salicylate ou catécholate et un au moins un ou plusieurs groupes triarylamine;
63. composé sensibilisateur auxquels sont liés un ou plusieurs groupes électrochromophores de type p, selon le point 62, comprenant encore un groupe pyrrole, thiophène, vinyle, alcool ou amine;
64. composé sensibilisateur auxquels sont liés un ou plusieurs groupes électrochromophores de type p, selon les points 62 et 63, tels que représentés par les molécules (9) et (10) de la figure 12.

### Description d'exemples

La description qui suit, donnée à titre d'exemple, se réfère aux dessins, où:
- la fig. 1 illustre une première variante d'un dispositif électrochrome transparent selon l'invention,
- la fig. 2 illustre une deuxième variante d'un dispositif électrochrome transparent selon l'invention,
- la fig. 3 illustre une troisième variante d'un dispositif électrochrome transparent selon l'invention,
- la fig. 4 illustre un exemple de dispositif électrochrome opaque,
- la fig. 5 illustre la possibilité de réaliser un dispositif électrochrome opaque dont la cathode et structurée, pour l'affichage réversible d'information,
- les fig. 6a à 6d illustrent différents modes d'exécution de dispositifs photoélectrochromes du type dynamique réagissant à la lumière visible (D-VIS) selon l'invention,
- les fig. 7a à 7d illustrent différents modes d'exécution de dispositifs photoélectrochromes du type dynamique réagissant à l'ultraviolet (D-UV) selon l'invention,
- les fig. 8a et 8b illustrent des dispositifs photoélectrochromes du type persistant réagissant à la lumière visible (P-VIS) (fig. 8a) et du type persistant réagissant à l'ultraviolet (P-UV) (fig. 8b),
- la fig. 9 illustre un dispositif photoélectrochrome selon l'invention pour l'écriture et le stockage réversible d'information,
- la fig. 10 illustre des exemples de structures de molécules électrochromes type n,
- la fig. 11 illustre un exemple de structure de molécule électrochrome type p, et
- la fig. 12 illustre des exemples de structures de molécules de sensibilisateurs avec électrochromophore type p lié.

Les désignations des électrodes comme *anode* et *cathode* ci-après se réfèrent à leur fonction durant le processus de coloration du système. Dans les processus de coloration décrits, les tensions appliquées le sont de manière à ce que la cathode soit polarisée négativement et l'anode, positivement.

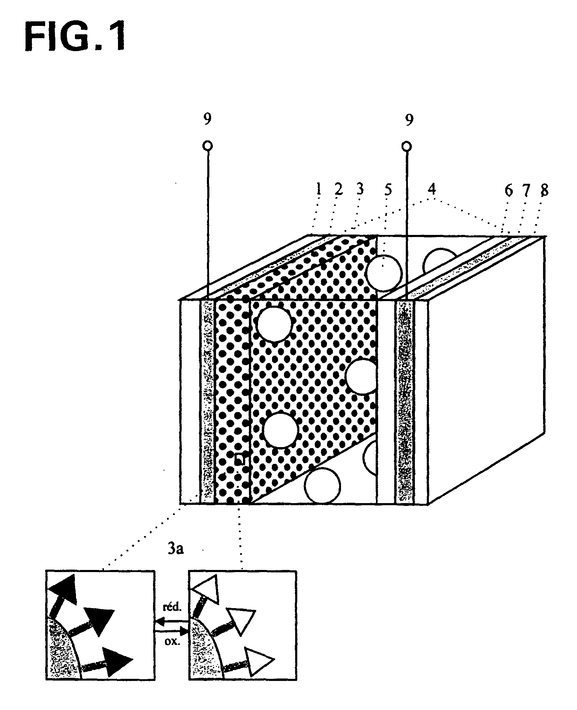

### 1. Systèmes électrochromes (fig. 1 à 5)

### 1.1. Systèmes électrochromes transparents (fig. 1 à 3) pour le contrôle de la transmission lumineuse avec une source de courant-tension extérieure (type l-a).

Un tel système comprend deux électrodes parallèles transparentes dont les supports respectifs 1 et 8 sont constitués chacun d'une plaque de verre ou de plastique conducteur, par exemple une plaque de verre revêtue d'oxyde d'étain 2 et 7, de préférence dopé, ou d'oxyde d'indium et étain, reliées à un circuit électrique extérieur par le biais de contacts 9 (fig. 1 à 3).

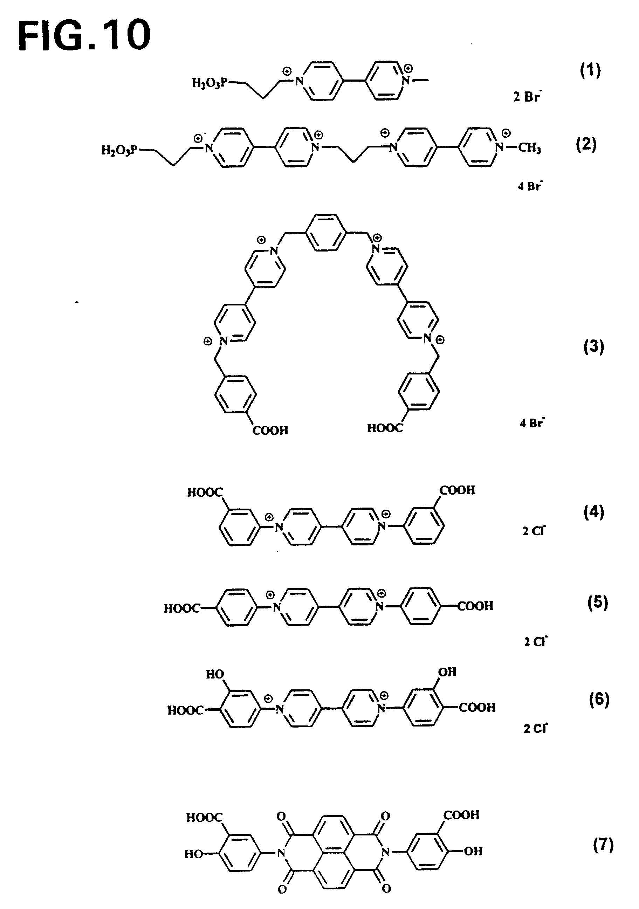

L'une des électrodes (cathode) est constituée d'une couche transparente de semi-conducteur nanocristallin, par exemple du dioxyde de titane, d'une épaisseur comprise entre 0,3 et 10 µm, par exemple 7 µm (référence 3 des fig. 1 à 3). Sa surface comporte une monocouche de molécules électrochromophores adsorbées du type de celles définies à la figure 10 (molécules (1) à (7)) et symbolisées dans les fig. 1 à 3 (détails 3a) par des triangles. Ces molécules comprennent premièrement un groupe d'attache, deuxièmement un groupe électrochromophore, groupe qui n'absorbe pas la lumière visible à l'état oxydé (triangles blancs) mais l'absorbe à l'état réduit (triangles noirs) (électrochromophore type n) et troisièmement, éventuellement, un ou plusieurs groupes polymérisables ou condensables. Le potentiel d'oxydoréduction de l'électrochromophore entre ses deux états d'oxydation doit être proche du niveau ou plus négatif que le niveau de la bande de conduction du semi-conducteur, par exemple entre 0 et - 0,8 V pour le dioxyde de titane. Le groupe d'attache doit permettre l'adsorption de la molécule sur le semi-conducteur. Dans le cas du dioxyde de titane, on peut utiliser comme groupe électrochromophore par exemple un ou plusieurs groupement viologène (dialkyl-4,4' bipyridinium) ou diimide de l'acide naphtalènetetracarboxylique-1,4,5,8, et comme groupe d'attache par exemple un carboxylate, un salicylate, un catécholate ou un phosphonate. Le groupe polymérisable, par exemple vinyle ou pyrrole, ou condensable, par exemple amine ou alcool, doit permettre, une fois l'adsorption effectuée, de lier les molécules entre elles de manière à rendre la couche résistante à la désorption.

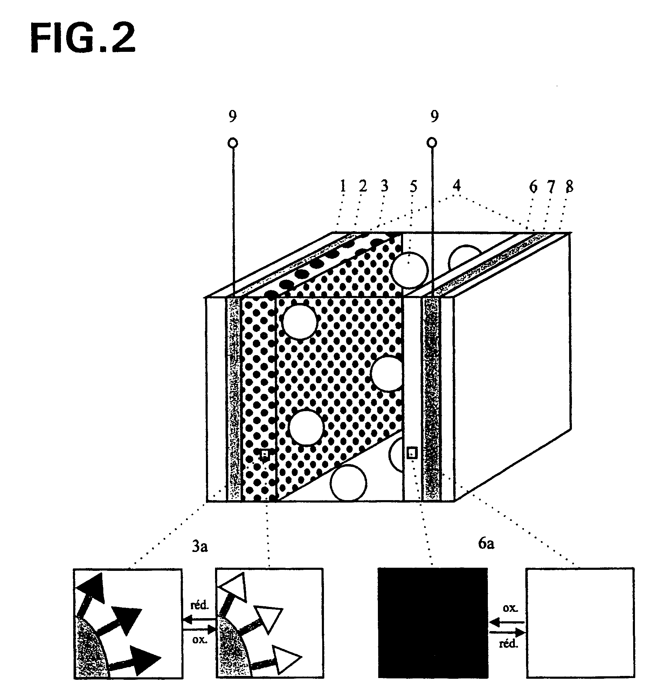

Comme représenté sur les figures 1 et 2, l'autre électrode (anode) est formée d'une couche 6 (et détail 6a) dense de matériau transparent de type polymérique réversiblement oxydable, incolore à l'état réduit et, respectivement, incolore (fig. 1) ou coloré (fig. 2) à l'état oxydé. La quantité de ce matériau doit être telle que l'on puisse en extraire au moins le nombre d'électrons nécessaire à réduire tous les groupements électrochromes adsorbés sur la cathode. Ce matériau est par exemple le poly-ferrocyanure de fer (II) ("blanc de Prusse") qui, à l'état oxydé constitue le "bleu de Prusse", électrodéposé selon la méthode décrite par Itaya, Ataka et Toshima dans *J. Am. Chem. Soc.* 1982, *104,* 4767.

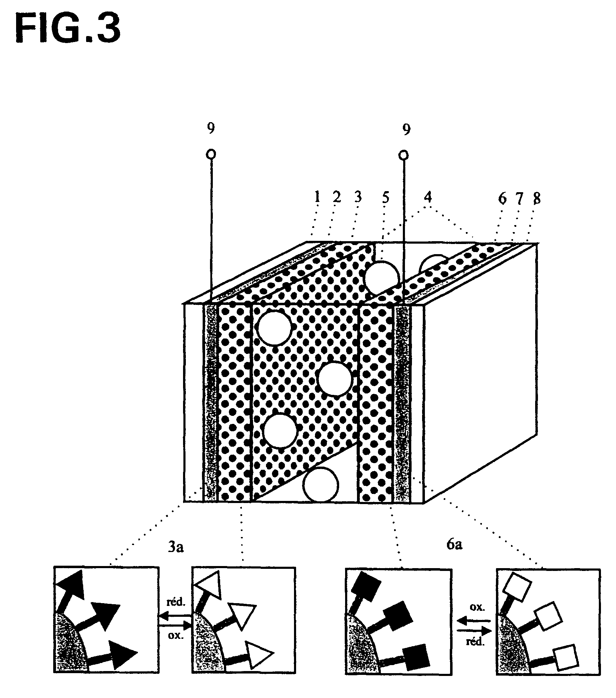

Alternativement (fig. 3), l'anode est formée d'une couche 6 transparente de semi-conducteur nanocristallin analogue à la cathode et dont la surface porte une monocouche de molécules adsorbées (carrés dans le détail 6a de la fig. 3) qui comprennent premièrement un groupe d'attache, deuxièmement un groupe électrochromophore qui n'absorbe pas la lumière visible à l'état réduit (carrés blancs) mais l'absorbe à l'état oxydé (carrés noirs) (électrochromophore type p, telle la molécule (8) de la fig. 11) et troisièmement, éventuellement un ou plusieurs groupes polymérisables ou condensables. Le potentiel d'oxydoréduction de l'électrochromophore entre ces deux états doit être proche du niveau de la bande de conduction du semi-conducteur, par exemple entre 0 et -0,8 V pour le dioxyde de titane. Le groupe électrochromophore peut aussi être remplacé par un groupe électroactif, aux propriétés électrochimiques semblables mais dont les deux états d'oxydation sont incolores. Dans le cas où les deux électrodes sont nanocristallines et portent des électrochromophores, anode et cathode peuvent porter les deux types d'électrochromophores, n et p coadsorbés, équilibre atteint de toute manière par désorption et diffusion au travers du système dans le cas où anode et cathode porteraient initialement des électrochromes respectivement p et n non-polymérisés. Dans ce système où les deux électrodes sont identiques, avec coadsorption des deux électrochromophores, l'électrochromophore p est inerte sur la cathode et l'électrochromophore n est inerte sur l'anode. Toutefois, suivant la polarisation, chacune des électrodes peut être indifféremment utilisée comme anode ou comme cathode.

Dans le cas général où la molécule électrochromophore p est présente sur l'anode, la cathode peut aussi être dépourvue de molécules électrochromophores n. Son électroactivité est alors basée sur l'insertion réversible de petits cations dans le semi-conducteur nanocristallin, par exemple le lithium dans le cas du dioxyde de titane.

En principe, le nombre d'électrons délivrés par l'anode après oxydation de tous les électrochromophores p ou après insertion réversible maximale de cations doit être comparable au nombre d'électrons consommés par la cathode après réduction de tous les électrochromophores n. Pour ajuster l'état initial du système qui doit ne contenir que des électrochromophores dans leur état incolore, ou pour corriger des déviations ultérieures du système qui empêcheraient de retrouver cet état incolore, une petite électrode auxiliaire peut être prévue dans le système. Par une oxydation ou une réduction irréversible du solvant ou de l'électrolyte, des électrons peuvent être fournis ou soutirés aux électrodes électrochromes de manière à corriger cette déviation.

L'espace 4 entre les deux électrodes (fig. 1 à 3), compris entre 10 et 100 µm, par exemple 30 µm, est rempli d'une solution formée soit d'un sel liquide électrochimiquement inactif soit d'un sel électrochimiquement inactif en solution dans un solvant, avec adjonction éventuelle de billes de verre 5 pour assurer l'espacement des électrodes. Le sel liquide sera par exemple du type trifluorométhanesulfonate (triflate) ou bis-(trifluorométhyl)sulfonylamidure (bis-triflylamidure) de N,N'-dialkyl imidazolium, de N,N'-dialkyl triazolium ou de N-alkyl thiazolium, portant ou non d'autres groupes alkyle. Le sel électrochimiquement inactif en solution dans un solvant sera un desdits sels liquides ou un sel solide, par exemple le bistriflylamidure, le triflate, le perchlorate ou l'hexafluorophosphate de lithium, de tetraalkylammonium ou de dialkyl-1,3 imidazolium. Le solvant sera un liquide stable envers les composants du système, par exemple l'acétonitrile, le butyronitrile, le méthoxypropionitrile, le glutaronitrile, le diméthylsulfoxyde, le sulfolane, la diméthylformamide, la diméthylacétamide, la N-méthyloxazolidinone, la diméthyl-tetrahydro pyrimidinone (DMPU).

Ainsi, dans un exemple de réalisation, un système électrochrome a été réalisé selon la structure décrite, sur verre conducteur de SnO₂, avec une cathode de dioxyde de titane nanocristallin de 7 µm d'épaisseur dérivée par le bromure de N-méthyl N'-(propylphosphonate-3)-bipyridinium (molécule (1), fig. 10), une anode de poly-ferrocyanure de fer (II) incolore déposé électrochimiquement et comme solution entre les électrodes, le bis-triflylamidure de lithium à une concentration de 0,3 M dans le glutaronitrile. La cellule est scellée par une colle ou un polymère fusible à chaud. Lorsque l'on applique entre les électrodes une tension de 1 V, l'absorbance du système à 600 nm passe de 0 à 1,5 en 2 secondes, l'aspect passant de l'incolore transparent au bleu foncé. Le processus est réversible dans le même intervalle de temps.

Dans une autre forme d'exécution, le même système a été réalisé avec une autre molécule adsorbée sur la cathode: le viologène dimérique muni d'un groupe propylphosphonate (molécule (2) fig. 10) dont le coefficient d'extinction au maximum d'absorption est double de celui du viologène 1. Avec un tel système, dans les mêmes conditions, l'absorbance à 550 nm passe de 0 à 3 en deux secondes, l'aspect passant de l'incolore transparent au bleu foncé. Le processus est réversible dans le même intervalle de temps.

Dans une autre exécution, le même système a été réalisé avec une autre molécule adsorbée sur la cathode: le bromure de bis-N,N'-[(carboxy-3 hydroxy-4 phényl)-4,4'} bipyridinium 6 (molécule (3) fig. 10). Un tel système, dans les mêmes conditions passe de même manière du jaunâtre transparent au vert foncé.

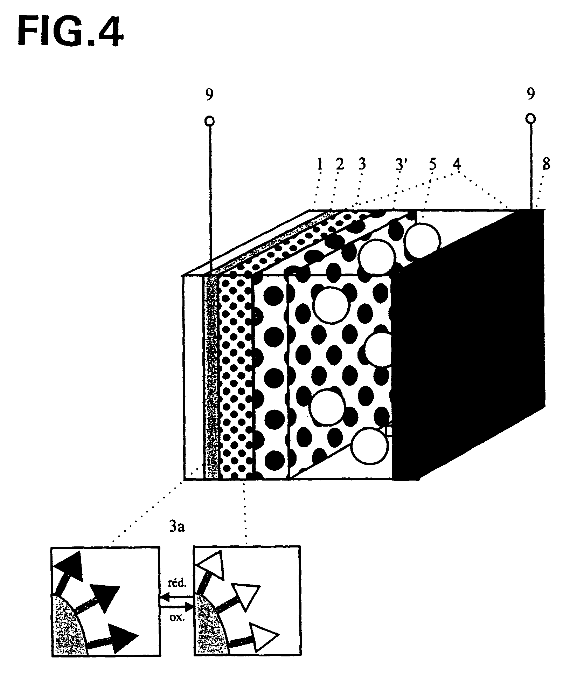

### 1.2. Systèmes électrochromes opaques pour le contrôle de la réflexion lumineuse avec une source de courant-tension extérieure (type I-b, fig. 4), permettant l'affichage d'information.

La structure du système est similaire à celle du système électrochrome transparent décrit sous 1.1. (éléments 2 et 5 et détail 3a identiques à ceux des fig. 1 à 3).

La cathode est constituée d'une couche opaque de semi-conducteur nanocristallin ou d'une couche transparente 3 de ce matériau, revêtue sur la face interne d'une couche opaque 3' de semi-conducteur microcristallin qui fonctionne dans les deux cas comme un réflecteur diffusif si l'électrochromophore est dans son état incolore.

L'anode 8 peut être constituée d'une plaque d'un métal oxydable électrochimiquement, par exemple le zinc, dont la forme oxydée est soluble dans le solvant utilisé et qui peut être oxydé à un potentiel proche de celui de la bande de conduction du semi-conducteur. La solution entre les électrodes 4 contient un sel du cation du métal constituant l'anode, à haute concentration.

Alternativement, l'anode peut être formée d'un dépôt de blanc de Prusse sur verre ou plastique conducteur, comme décrit sous 1.1.

Dans un exemple d'exécution, un système a été réalisé dont la cathode est formée de dioxyde de titane nanocristallin de 7 µm d'épaisseur revêtu sur la face située à l'intérieur de la cellule électrochrome, d'une couche de dioxyde de titane microcristallin sous forme rutile, opaque, blanc. L'anode est constituée d'une plaque de zinc. La solution entre les électrodes contient du chlorure de zinc à la concentration de 0,2 M dans le bis-triflylamidure d'éthyl-1 méthyl-3 imidazolium. Le reste du dispositif est identique l'exécution décrite sous 1.1, avec les molécules adsorbées (1) ou (2) définies à la fig. 10. Le système passe de l'aspect blanc, par réflexion, à l'aspect bleu, par réflexion, en 2 secondes lorsque la tension appliquée entre les électrodes passe de 0 à 1 V. Le processus est réversible dans le même intervalle de temps. Si les deux électrodes sont connectées en court-circuit, le système devient bleu, état thermodynamiquement le plus stable, le potentiel d'oxydoréduction du zinc étant inférieur à celui du groupe électrochromophore viologène dans ces conditions. Que le système se trouve dans l'état coloré ou incolore, cet état persiste durant plusieurs heures lorsque le circuit est ouvert.

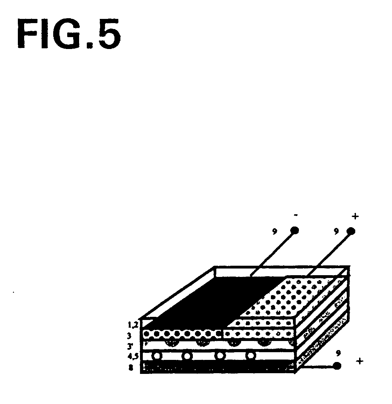

Dans un des deux exemples d'exécution 1.1 ou 1.2, l'électrode (verre conducteur et couche de semi-conducteur) peut être gravée de manière à déterminer des segments conducteurs séparés par des bandes isolantes. Des connexions électriques latérales permettent de contrôler indépendamment chacun des segments. On peut ainsi réaliser un dispositif permettant l'affichage de symboles, chiffres ou lettres (fig. 5).

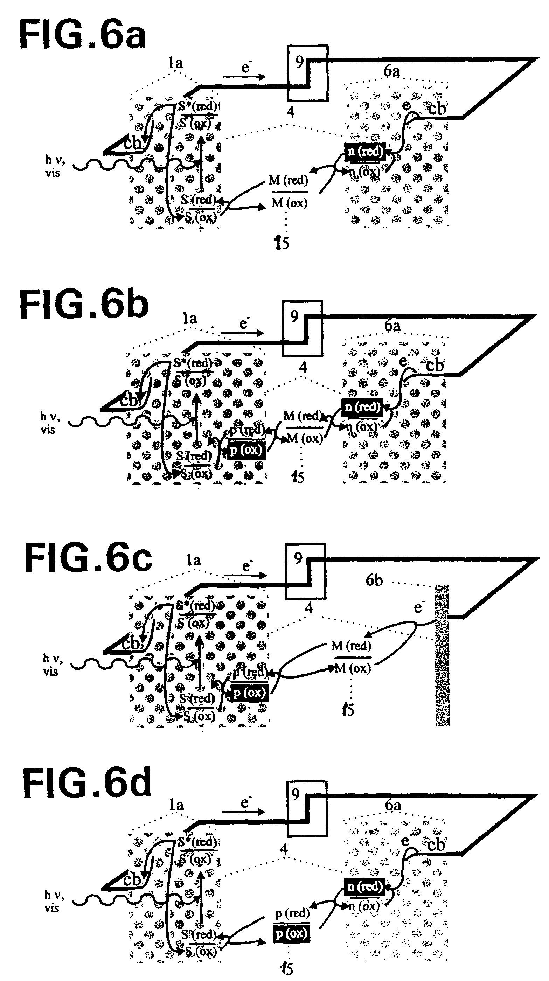

### 2. Systèmes photoélectrochromes (fig. 6 à 9)

Le dispositif présente la propriété de modifier sa couleur sous l'effet de la lumière.

Le système comprend deux électrodes parallèles transparentes dont le support est constitué d'une plaques de verre ou de plastique conducteur, par exemple une plaque de verre revêtue d'oxyde d'étain dopé ou d'oxyde d'indium et étain.

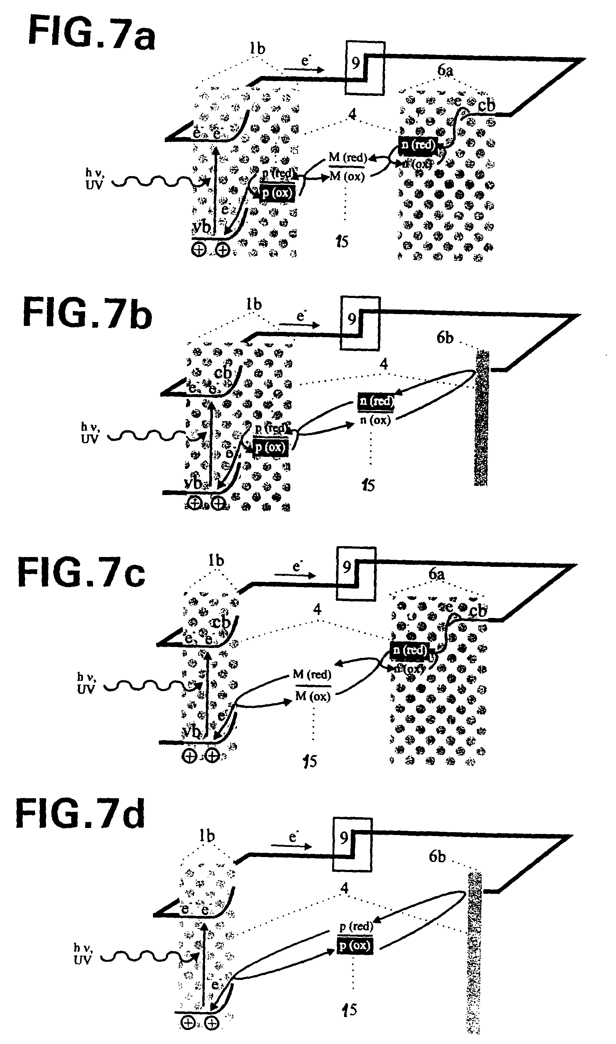

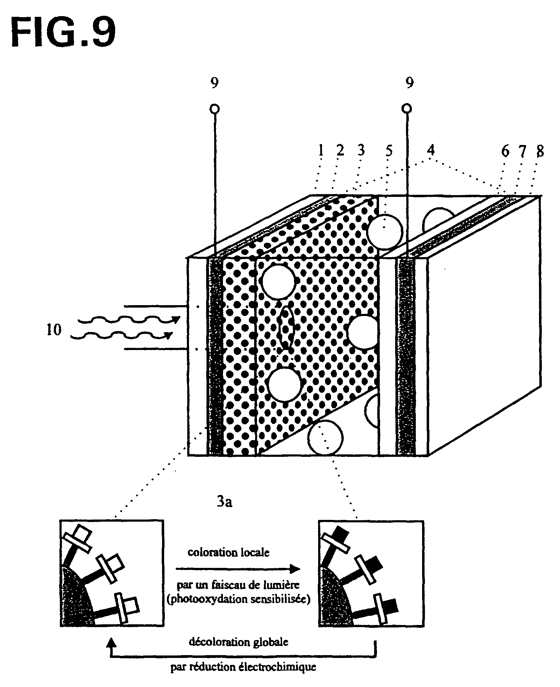

Un tel système comprend, comme source de courant-tension interne une électrode photovoltaïque (références 1a et 1b fig. 6 à 8 et références 1, 2, 3 fig. 9) (photoanode). Cette électrode qui remplace l'anode décrite sous 1.1., est réalisée comme la cathode, par déposition d'une couche de semi-conducteur nanocristallin sur une couche de verre ou de plastique conducteur. Sous illumination, la photoanode produit des électrons au potentiel de la bande de conduction cb (fig. 6 à 8) du semi-conducteur. Ces électrons sont acheminés par le circuit électrique extérieur 9, avec ou sans apport de tension supplémentaire, jusqu'à la cathode (références 6a et 6b fig. 6 à 8 et références 6, 7, 8 fig. 9) où, via la bande de conduction cb du semi-conducteur, ils réduisent les molécules électrochromes type n adsorbées. Les électrons sont restitués à la photoanode par l'oxydation d'une molécule réversiblement oxydable (donneur 15, fig. 6 et 7), éventuellement un électrochromophore de type p.

D'une part, on peut distinguer deux types de systèmes se colorant sous l'effet de la lumière:

D. Dynamique (fig. 6 et 7): les deux systèmes rédox, à savoir l'électrochrome n adsorbé et le donneur sont en contact électrochimique direct ou indirect. Dans le cas d'un contact direct, le donneur, en solution, peut être soit un médiateur électrochimique non-électrochromophore, soit un électrochromophore p. Dans le cas d'un contact indirect, l'électrochromophore p est fixé à l'anode par un groupe adsorbable et le contact électrochimique est assuré soit par un médiateur non-électrochromophore en solution, soit par un polymère conducteur. Le transfert d'électrons, direct ou indirect, oxyde l'électrochromophore n et réduit l'éventuel électrochromophore p, processus opposé à celui engendré par la lumière. De la compétition entre ces deux processus résulte l'état stationnaire dynamique du système caractérisé par une certaine proportion du ou des électrochromophores dans leur état coloré. La coloration globale s'adapte donc automatiquement et très rapidement à l'intensité de l'illumination. Le réglage préalable qui détermine la réponse du système s'effectue en ajustant les paramètres qui contrôlent la compétition entre les deux processus opposés: concentration du médiateur ou de l'électrochromophore p en solution, diffusion de ces espèces (par la viscosité du solvant par exemple), écartement des électrodes, rendement photovoltaïque de la photoanode. L'utilisateur peut contrôler la réponse par le biais du circuit électrique externe.

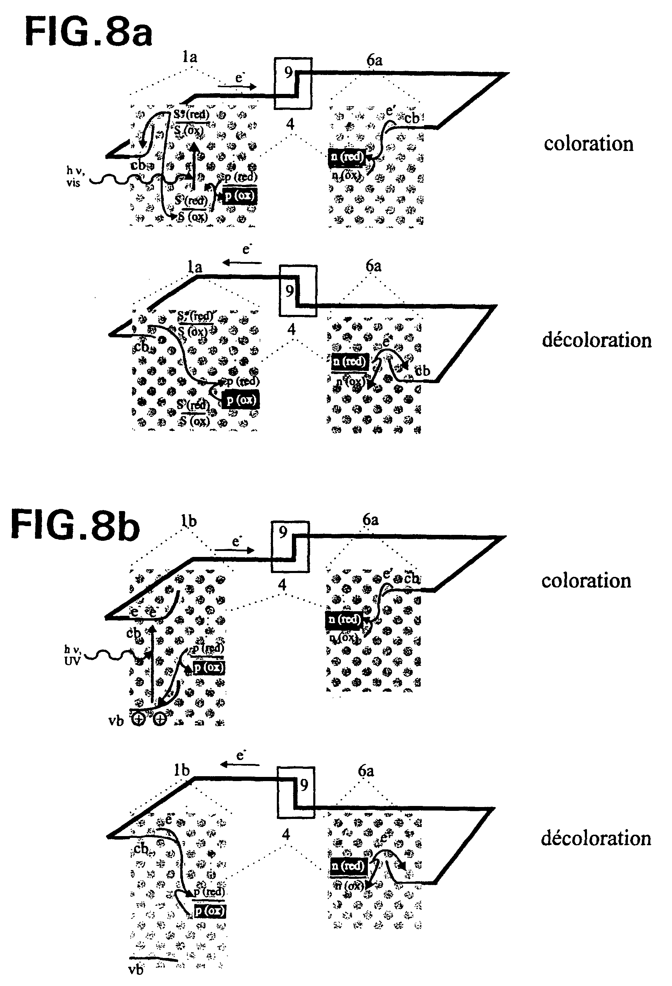

P. Persistant (fig. 8 et 9): les deux systèmes rédox, à savoir l'électrochromophore n adsorbé et le donneur ne sont pas en contact électrochimique. On peut soit fixer le donneur à la cathode par un groupe adsorbable, soit, si ce donneur est en solution, empêcher sa diffusion par une membrane entre les électrodes. Ce type de système ne s'adapte pas à l'intensité instantanée de l'illumination mais se colore en fonction de la quantité de photons reçus depuis le début de l'illumination, jusqu'à atteindre un maximum (saturation) qui persiste même si l'intensité diminue ultérieurement. Le système peut être ramené à l'état incolore (effaçage) par l'action d'une source de courant-tension extérieure qui ramène le ou les électrochromophores dans leur état initial.

D'autre part, on peut définir deux types d'activité photovoltaïque de l'anode:

UV. Le semi-conducteur de l'anode est excité directement par la lumière ultraviolette (hν UV, fig. 7 et 8b) (excitation de la bande interdite). Le donneur est dans ce cas oxydé par les trous engendrés dans la bande de valence du semi-conducteur.

VIS. Le semi-conducteur est sensibilisé à la lumière visible (hν VIS, fig. 6 et 8a) par adsorption d'un colorant. Lorsque l'anode photovoltaïque est illuminée, le colorant qu'elle porte injecte des électrons dans la bande de conduction du semi-conducteur. Le colorant doit être choisi tel qu'à l'état excité par la lumière visible, il soit capable d'injecter un électron dans cette bande de conduction. On peut utiliser par exemple un complexe de ruthénium comprenant des ligands aromatiques du type pyridine ou poly-pyridine dotés d'un groupe d'attache permettant l'adsorption, par exemple, le phosphonate, le carboxylate, le salicylate ou le catécholate.

De plus, pour assurer le flux des électrons de la photoanode vers la cathode et optimiser le système, il peut être nécessaire d'équiper le circuit électrique extérieur d'une source de courant-tension ou d'une diode.

Cette invention concerne alors tous les systèmes photoélectrochromes réalisés en combinant de toutes les manières possibles les principes D et P avec les principes UV et VIS.

### 2.1. Sytèmes photoélectrochromes dynamiques pour filtres auto-adaptifs ou vitrages "intelligents" (II-B)

### 2.1.1. Systèmes réagissant à la lumière visible.

### 2.1.1.1. Anode à colorant, cathode à électrochromophore (D-VIS, donneur en solution, fig. 6a et 6d).

La cathode est réalisée comme décrit sous 1.1. L'anode est également constituée d'une couche de dioxyde de titane nanocristallin mais d'un facteur de rugosité 10 à 30 fois inférieur à celui de la cathode, de manière à ce que sa couleur ne soit par aisément perceptible et ne confère donc pas au système une coloration permanente. Par exemple, pour une cathode d'un facteur de rugosité égal à 1000, on réalisera une anode dont le facteur de rugosité vaudra 30 à 100. Si le facteur de rugosité varie linéairement avec l'épaisseur, à une cathode de par exemple 10 µm d'épaisseur correspondra une anode de 0,3 à 1 µm d'épaisseur.

La quantité de colorant S de l'anode étant très inférieure à la quantité d'électrochrome n de la cathode, chaque molécule de colorant doit effectuer plusieurs cycles d'injection d'électrons pour que tout l'électrochrome de la cathode soit réduit. Un médiateur électrochimique 15 en solution doit être présent qui puisse réduire le colorant oxydé S⁺ après chaque injection d'électron. Son potentiel d'oxydoréduction doit donc être inférieur à celui du colorant. De manière que le système revienne à l'état initial, incolore, lorsque l'illumination cesse, le médiateur électrochimique en forme oxydée doit être capable d'oxyder l'électrochrome réduit. Ce processus doit cependant être suffisamment lent pour que, sous illumination, l'état stationnaire atteint par le système soit caractérisé par une forte proportion d'électrochrome réduit. Une manière pratique d'ajuster la cinétique du processus consiste à varier la viscosité de la solution 4. Les sels liquides sont des solvants bien adaptés pour ce faire.

Dans une variante d'exécution, on peut utiliser comme médiateur électrochimique un électrochromophore p (fig. 6d).

Dans un exemple de réalisation, l'anode photovoltaïque formée d'une couche de dioxyde de titane nanocristallin de 0,3 µm porte comme colorant adsorbé un complexe de ruthénium, par exemple le *cis*-dithicyanato bis(2,2'-bipyridyl-4,4'-dicarboxylato)-ruthénium(II) ou le triméthyl-4,4',4" terpyridine phosphonatoterpyridine ruthénium (II), la cathode est formée d'une couche de dioxyde de titane nanocritallin de 7 µm et porte les molécules électrochromophores adsorbées, par exemple la molécule (1) définie à la fig. 10, et la solution entre les électrodes comprend un sel de complexe de cobalt, par exemple le trifluorométhanesulfonate de tris-phénanthroline cobalt (II) et un sel de lithium, par exemple le bis-triflylamidure, dans un sel liquide décrit sous 1.1, par exemple le bis-triflylamidure d'éthyl-1 méthyl-2 imidazolium. Sous illumination par la lumière solaire simulée (AM 1,5), le système devient bleu et absorbe plus de 90% de la lumière à 600 nm. Lorsque l'illumination cesse, le système redevient incolore.

### 2.1.1.2. Anode avec donneur électrochromophore p lié au colorant, cathode à électrochromophore n (D-VIS, fig. 6b).

Un tel système est constitué comme sous 2.1.1.1 à l'exception du fait que le facteur de rugosité des deux électrodes 1a et 6a est en principe identique, compris entre 100 et 1500, par exemple 700 et que le colorant S adsorbé sur la cathode porte un groupe électrochromophore p lié à ce colorant par une liaison covalente.

Lorsque la photoanode est illuminée par la lumière visible (hν VIS), le colorant qu'elle porte injecte des électrons dans la bande de conduction du semi-conducteur et oxyde immédiatement le groupe électrochromophore p qui devient coloré. Les électrons sont acheminés par le circuit électrique, jusqu'à la cathode où, via la bande de conduction du semi-conducteur, ils réduisent la molécule électrochrome adsorbée.

En principe, le nombre d'électrons délivrés par l'anode après oxydation de tous les électrochromophores p doit être comparable au nombre d'électrons consommés par la cathode après réduction de tous les électrochromophores n.

Un tel système est naturellement coloré dans les deux états illuminé et non-illuminé. En l'absence d'illumination, sa coloration résulte de l'absorption de la lumière par le colorant; sous illumination s'ajoutent les absorptions des électrochromophores p oxydé et n réduit.

La solution entre les électrodes est constituée d'un médiateur électrochimique dont le potentiel d'oxydoréduction est intermédiaire entre celui de l'électrochromophore p et celui de l'électrochromophore n. Sa concentration et les proportions de forme oxydée et réduite, en principe égales, sont ajustées de manière que le système revienne à l'état initial, incolore, lorsque l'illumination cesse. Ce processus doit cependant être suffisamment lent pour que sous illumination, l'état stationnaire atteint par le système soit caractérisé par une forte proportion d'électrochrome n réduit et d'électrochrome p oxydé. Une manière pratique d'ajuster la cinétique du processus consiste à varier la viscosité de la solution. Les sels liquides sont des solvants bien adaptés pour ce faire.

Dans un exemple de réalisation, l'anode photovoltaïque est formée d'une couche de dioxyde de titane nanocritallin de 7 µm qui porte comme molécule adsorbée (molécules (9) ou (10) définies à la fig. 12) un complexe de ruthénium, par exemple le ruthénium bis-terpyridine muni d'un groupe d'attache, par exemple le phosphonate et lié à un groupe électrochromophore p, par exemple le (bis(4',4,"-méthoxyphényl)amino-4 phényl (pour la molécule (9)) ou le (bis(4',4,"-méthoxyphényl)amino-4 phenoxyméthylphényl (pour la molécule (10)). La cathode formée d'une couche de dioxyde de titane nanocritallin de 7 µm porte une monocouche de molécules électrochromophores n adsorbées, par exemple la molécule (1) définie à la fig. 10. La solution entre les électrodes comprend un sel de complexe de cobalt sous forme de cobalt (II) et de cobalt (III), par exemple le trifluorométhanesulfonate de tris-phénanthroline cobalt et un sel de lithium, par exemple le bis-triflylamidure, dans un sel liquide décrit sous 1.1, par exemple le bis-triflylamidure d'éthyl-1 méthyl-2 imidazolium. Sous illumination par la lumière solaire simulée (AM 1,5), le système passe de l'orange au vert et absorbe alors plus de 90% de la lumière de 600 à 750 nm. Lorsque l'illumination cesse, le système redevient orange et l'absorption de 600 à 750 nm redevient inférieure à 10%.

### 2.1.1.3. Anode avec électrochromophore coadsorbé (D-VIS, fig. 6b)

Un tel système est constitué comme sous 2.1.1.2 à l'exception du fait que le groupe électrochromophore p n'est pas lié par une liaison covalente au colorant, mais constitue une molécule distincte, portant également un groupe d'attache et coadsorbée avec le colorant sur la photoanode. Le processus d'oxydation de l'électrochromophore p par le colorant n'est plus intramoléculaire, comme sous 2.1.1.2 mais intermoléculaire. Si le colorant est capable d'oxyder successivement plusieurs molécules électrochromophores p coadsorbées, il est possible d'adsorber plus de molécules électrochromophores que de colorant, ce qui limite la coloration du système non-illuminé.

La solution entre les électrodes est identique à celle décrite sous 2.1.1.1.

Dans un exemple de réalisation, l'anode photovoltaïque est formée d'une couche de dioxyde de titane nanocritallin de 7 µm qui porte comme molécules adsorbées premièrement un complexe de ruthénium, par exemple le ruthénium bis-terpyridine muni d'un groupe d'attache, par exemple le phosphonate et deuxièmement une molécule électrochromophore p, par exemple la molécule (8) définie à la fig. 11. La concentration de surface de la molécule électrochromophore est deux fois supérieure à celle du colorant, proportion obtenue en sensibilisant l'électrode par immersion dans une solution des deux molécules dans un rapport de concentrations de un colorant pour deux électrochromophores. La cathode formée d'une couche de dioxyde de titane nanocritallin de 7 µm porte une monocouche de molécules électrochromophores n adsorbés, par exemple la molécule (1) définie à la fig. 10. La solution entre les électrodes est identique à celle décrite sous 2.1.1.2. Sous illumination par la lumière solaire simulée (AM 1,5), le système passe de l'orange très clair au bleu foncé et absorbe alors plus de 90% de la lumière de 600 à 750 nm. Lorsque l'illumination cesse, le système revient à son état initial et l'absorption de 600 à 750 nm redevient inférieure à 10%.

### 2.1.1.4. Anode avec donneur électrochromophore p lié au colorant, cathode sans électrochromophore (D-VIS, fig. 6c).

Les dispositifs décrits sous 2.1.1.2 et 2.1.1.3 peuvent aussi être réalisés avec une cathode 6b de verre ou plastique conducteur (exécution transparente) ou de métal (exécution opaque) qui ne porte aucune couche de semi-conducteur ni de molécules adsorbées. Le système peut alors contenir, comme médiateur électrochimique, un électrochromophore type p en solution.

### 2.1.2. Systèmes réagissant à l'ultraviolet

### 2.1.2.1. Electrochromophore p adsorbé à l'anode, électrochromophore n adsorbé à la cathode (D-UV, fig. 7a)

Pour obtenir un système réagissant à l'ultraviolet, il convient d'adsorber sur la photoanode 1b une monocouche de molécules électrochromophores incolores à l'état réduit et colorées à l'état oxydé (électrochromophore p) et sur la cathode 6a, une monocouche de molécules électrochromophores n. Le facteur de rugosité des deux électrodes est en principe identique, compris entre 100 et 1500, par exemple 700. En principe, le nombre d'électrons délivrés par la l'anode après oxydation de tous les électrochromophores p doit être comparable au nombre d'électrons consommés par la cathode après réduction de tous les électrochromophores n.

Lorsque la photoanode est illuminée par un rayonnement d'ultraviolet proche (hν UV) (350-420 nm), l'excitation des électrons de la bande de valence du semi-conducteur dans la bande de conduction engendre dans cette bande de valence des "trous" d'un potentiel d'environ 3 V qui oxydent l'électrochromophore p qui devient coloré. Les électrons sont acheminés par le circuit électrique 9, jusqu'à la cathode où, via la bande de conduction du semi-conducteur, ils réduisent la molécule électrochrome adsorbée.

La solution entre les électrodes est constituée d'un médiateur électrochimique 15 dont le potentiel d'oxydoréduction est intermédiaire entre celui de l'électrochromophore p et celui de l'électrochromophore n. Sa concentration et les proportions de forme oxydée et réduite, en principe égales, sont ajustées de manière à ce que le système revienne à l'état initial, incolore, lorsque l'illumination cesse. Ce processus doit cependant être suffisamment lent pour que sous illumination, l'état stationnaire atteint par le système soit caractérisé par une forte proportion d'électrochrome n réduit et d'électrochrome p oxydé. Une manière pratique d'ajuster la cinétique du processus consiste à varier la viscosité de la solution. Les sels liquides sont des solvants bien adaptés pour ce faire.

Dans un exemple de réalisation, l'anode photovoltaïque est formée d'une couche de dioxyde de titane nanocritallin de 7 µm qui porte comme molécule électrochromophore p adsorbée une triarylamine munie d'un groupe d'attache, par exemple le (bis(4',4,"-méthoxyphényl)amino-4 phénoxy)-3 propylphosphonate de sodium (molécule (8) définie à la fig. 11). La cathode formée d'une couche de dioxyde de titane nanocristallin de 7 µm porte l'électrochromophore n adsorbé, par exemple la molécule (1) définie à la fig. 10. La solution entre les électrodes est identique à celle décrite sous 2.1.1.2.

### 2.1.2.2. Anode avec donneur électrochromophore p, cathode sans électrochromophore (D-UV, fig. 7b)

Le dispositif décrit sous 2.1.2.1 peut aussi être réalisé avec une cathode 6b de verre ou plastique conducteur (exécution transparente) ou de métal (exécution opaque) qui ne porte aucune couche de semi-conducteur ni de molécules adsorbées. Le système peut alors contenir, comme médiateur électrochimique 15, un électrochromophore type n en solution.

### 2.1.2.3. Anode sans donneur électrochromophore, cathode avec électrochromophore n (D-UV, fig. 7c)

Le dispositif décrit sous 2.1.2.1 peut aussi être réalisé avec une anode 1b dont le semi-conducteur ne porte aucune couche de molécules électrochromophores adsorbées. Les trous dans la bande de valence du semi-conducteur oxydent alors directement le médiateur électrochimique 15 en solution qui oxyde le composé électrochrome n réduit de la cathode 6a.

### 2.1.2.4. Anode sans donneur électrochromophore, cathode sans électrochromophore, médiateur électrochimique électrochromophore p en solution. (D-UV, fig. 7d).

Le dispositif décrit sous 2.1.2.3 peut aussi être réalisé avec une cathode 1b de verre ou plastique conducteur (exécution transparente) ou de métal (exécution opaque) qui ne porte aucune couche de semi-conducteur ni de molécules adsorbées. Le médiateur électrochimique 15 est alors un électrochromophore p.

### 2.2. Systèmes photoélectrochromes persistants pour le stockage réversible d'information (III-A) (fig. 8 et 9)

### 2.2.1. Systèmes réagissant à la lumière visible (P-VIS, fig. 8a et 9)

Le dispositif présente la propriété de modifier sa couleur sous l'effet de la lumière lorsqu'une tension lui est appliquée. Quelle que soit l'illumination, il retourne à l'état initial lorsque la tension est inversée.

Le système comprend deux électrodes parallèles transparentes ou opaques comme décrit sous 2.1. connectées par un circuit électrique muni d'une source de courant-tension 9.

### 2.2.1.1. Systèmes transparents

L'anode 1a (fig. 8a) ou 1, 2, 3 (fig. 9) avec molécules adsorbées est constituée de manière analogue à celle décrite sous 2.1.1.2. (molécules adsorbées du type (9) et (10) définies à la fig. 12 et représentées dans la fig. 9, détail 3a, par un rectangle (chromophore) et un carré (électromophore p)) ou à celle décrite sous 2.1.1.3. (coadsorption des molécules adsorbées du type (8) définie à la fig. 11 et d'un complexe de ruthénium muni d'un groupe d'attache). En plus de ces molécules, il peut être nécessaire de coadsorber une molécule électrochimiquement inactive qui isole les électrochromophores p adsorbés les uns des autres, de manière à éviter les transferts d'électrons entre ces électrochromophores, qui empêcheraient le confinement local de l'information.

La cathode est réalisée comme décrit sous 1.1. à l'exception du fait qu'elle n'est pas revêtue d'une monocouche moléculaire. La solution entre les électrodes 4 contient un sel d'un ion intercalable réversiblement dans le semi-conducteur, dissous dans un solvant tel que décrit sous 1.1. Lorsqu'un faisceau de lumière 10 (fig. 9), par exemple laser, atteint un domaine de l'anode, le colorant du site injecte des électrons dans la bande de conduction du semi-conducteur, et le colorant oxydé oxyde immédiatement le groupe électrochromophore p qui lui est lié. Sous l'effet de la tension électrique appliquée, l'électron est extrait de l'anode et acheminé à la cathode où il permet l'intercalation d'un cation.

Dans une variante, la cathode est réalisée comme décrit sous 1.1. à l'exception du fait qu'elle est revêtue d'une monocouche moléculaire d'un électrochromophore n (fig. 8a) ou d'une molécule électroactive adsorbable dont les deux états d'oxydation sont incolores (élément n non-électrochromophore). Dans ce cas, l'électron extrait de l'anode et acheminé à la cathode permet la réduction de la molécule électroactive électrochromophore ou non.

Dans une autre variante (fig. 9), la cathode est constituée d'une couche dense de matériau transparent 6 de type polymérique réversiblement oxydable, incolore dans ses deux états d'oxydation. Dans ce cas, l'électron extrait de l'anode et acheminé à la cathode permet la réduction du polymère.

La coloration locale engendrée par l'oxydation de la molécule électrochromophore à l'endroit de l'illumination peut être effacée en annulant la tension entre les électrodes et en les laissant donc en court-circuit, voire en appliquant une tension opposée.

Dans un exemple de réalisation, l'anode est formée d'une couche de dioxyde de titane nanocritallin de 7 µm qui porte comme molécule adsorbée (molécule (9) ou (10) fig. 12) un complexe de ruthénium, par exemple le ruthénium bis-terpyridine muni d'un groupe d'attache, par exemple le phosphonate et lié à un groupe électrochromophore p, par exemple le (bis(4',4,"-méthoxyphényl)amino-4 phényl (pour la molécule (9)) ou le (bis(4',4,"-méthoxyphényl)amino-4 phenoxyméthylphényl (pour la molécule (10)). La cathode est formée d'une couche de dioxyde de titane nanocritallin de 7 µm. La solution entre les électrodes comprend un sel de lithium, par exemple le bis-triflylamidure dans un sel liquide décrit sous 1.1, par exemple le bis-triflylamidure d'éthyl-1 méthyl-2 imidazolium. Lorsque le système est soumis à une tension de 0,5 volts de manière que l'anode soit chargée positivement et la cathode négativement, une illumination localisée pendant une minute par de la lumière blanche d'une intensité de 1 soleil (AM 1,5) produit un changement de couleur de l'orange au vert exclusivement sur la portion éclairée. Le système peut être conservé en circuit ouvert dans cet état durant plusieurs heures. Il peut être ramené dans son état initial en appliquant une tension de - 0,5 volts.

### 2.2.1.2. Systèmes opaques

Le système est identique au système photoélectrochrome transparent décrit sous 2.2.1, sauf en ce qui concerne l'anode. Celle-ci est constituée d'une couche opaque de semi-conducteur nanocristallin.

Dans un exemple d'exécution, l'anode est formée de dioxyde de titane nanocristallin de 7 µm d'épaisseur revêtu sur la face située à l'intérieur de la cellule, d'une couche de dioxyde de titane microcristallin sous forme rutile, opaque, blanc, qui porte comme molécule adsorbée (molécules (9) ou (10) fig. 12). Le reste du dispositif est identique à l'exécution décrite sous 2.2.1. Ce système est mieux compatible avec la présence d'un électromophore n sur la cathode, du fait que celle-ci est cachée entièrement par l'anode opaque et que son éventuelle coloration n'interfère pas avec un processus de stockage et de lecture d'information qui a lieu sur l'anode.

### 2.2.2. Systèmes réagissant à l'ultraviolet (P-UV, fig. 8b)

Dans le cas où la cathode ne porte pas de colorant adsorbé mais uniquement un composé électrochromophore p, le système réagit à la l'ultraviolet de la même manière que le système décrit sous 2.2.1. réagit à la lumière visible.

## Revendications

1. Dispositif électrochrome possédant la propriété de changer de couleur sous l'effet d'une tension électrique comprenant au moins une cathode (1,2) et une anode (7,8; 8), l'une au moins de ces électrodes étant au moins en partie constituée d'un substrat transparent ou translucide portant un revêtement électriquement conducteur (2,7), et une solution électrolytique (4) disposée entre ces électrodes ainsi qu'un circuit électrique reliant par le biais de contacts (9) lesdites cathode et anode, **caractérisé par le fait que** la cathode porte un revêtement (3) constitué d'au moins une couche d'au moins un matériau semi-conducteur nano-cristallin, ayant un facteur de rugosité au moins égal à 20, à la surface duquel est adsorbée une monocouche de molécules électroactives ayant la propriété d'être incolores à l'état oxydé et colorées à l'état réduit, **par le fait que** l'anode comprend un métal réversiblement oxydable, la forme oxydée dudit métal étant soluble dans la solution électrolytique.

2. Dispositif électrochrome possédant la propriété de changer de couleur sous l'effet d'une tension électrique comprenant au moins une cathode (1,2) et une anode (7,8), l'une au moins de ces électrodes étant au moins en partie constituée d'un substrat transparent ou translucide portant un revêtement électriquement conducteur (2,7), et une solution electrolytique (4) disposée entre ces électrodes ainsi qu'un circuit électrique reliant par le biais de contacts (9) lesdites cathode et anode, **caractérisé par le fait que** l'anode porte un revêtement (6) constitué d'au moins une couche d'au moins un matériau semi-conducteur nanocristallin, ayant un facteur de rugosité au moins égal à 20, à la surface duquel est adsorbée une monocouche de molécules électroactives ayant la propriété d'être incolores à l'état réduit et colorées à l'état oxydé, et **par le fait que** le dispositif contient au moins un composé électroactif auxiliaire ayant la propriété de pouvoir être oxydé ou réduit de manière réversible.

3. Dispositif électrochrome selon la revendication 1, **caractérisé par le fait qu'**un réflecteur diffusif (3') est placé du côté de la face de la cathode intérieure au système.

4. Dispositif électrochrome selon la revendication 3, **caractérisé par le fait que** le réflecteur diffusif est constitué d'une couche d'un oxyde métallique microcristallin revêtue sur la face interne de la cathode.

5. Dispositif électrochrome selon la revendication 1, **caractérisé par le fait que** ledit métal reversiblement oxydable est le zinc.

6. Dispositif électrochrome selon la revendication 1, **caractérisé par le fait que** lesdites molécules électroactives sont constituées d'au moins un type de molécules électrochromophores comprenant au moins un groupe d'attache adsorbable et au-moins un groupe électrochromophore.

7. Dispositif électrochrome selon la revendication 6, **caractérisé par le fait que** lesdits groupes électrochromophores sont choisis parmi le N,N'-dialkylbipyridinium et la diimide de l'acide naphtalène-tétracarboxylique-1,4,5,8, et **par le fait que** lesdits groupes d'attache sont choisis parmi les groupes carboxylate, salicylate, catécholate ou phosphonate.

8. Dispositif électrochrome selon la revendication 2, **caractérisé par le fait que** lesdites molécules électroactives sont constituées d'au moins un type de molécules électrochromophores comprenant au moins un groupe d'attache adsorbable et au moins un groupe électrochromophore.

9. Dispositif électrochrome selon la revendication 8, **caractérisé par le fait que** lesdites molécules électrochromophores comprennent, comme groupe électrochromophore, un groupe triarylamine et, comme groupe d'attache adsorbable, le groupe phosphonate.

10. Dispositif électrochrome selon l'une des revendications 1 et 2, **caractérisé par le fait que** ladite solution électrolytique est constituée d'au moins un sel liquide électrochimiquement inerte.

## Patentansprüche

1. Elektrochrome Vorrichtung mit der Eigenschaft, die Farbe unter Einfluss einer elektrischen Spannung zu wechseln, mit wenigstens einer Kathode (1, 2) und einer Anode (7, 8), wobei wenigstens eine dieser Elektroden wenigstens teilweise aus einem durchsichtigen oder lichtdurchlässigen, eine elektrisch leitende Beschichtung (2, 7) tragenden Substrat besteht, und mit einer elektrolytischen Lösung (4), welche zwischen diesen Elektroden angeordnet ist, sowie mit einem elektrischen Stromkreis der über Anschlüsse (9) die genannten Kathode und Anode verbindet, **dadurch gekennzeichnet, dass** die Kathode eine Beschichtung (3) trägt, die aus wenigstens einer Schicht wenigstens eines nanokristallinen halbleitenden Materials, mit einem Rauhigkeitsfaktor von wenigstens 20, besteht, an dessen Oberfläche eine Einzelschicht elektroaktiver Moleküle adsorbiert ist, welche die Eigenschaft aufweisen, farblos im oxidierten Zustand und farbig im reduzierten Zustand zu sein, und dass die Anode ein reversibel oxidierbares Metall aufweist, wobei die oxidierte Form des genannten Metalles in der elektrolytischen Lösung lösbar ist.

2. Elektrochrome Vorrichtung mit der Eigenschaft, die Farbe unter Einfluss einer elektrischen Spannung zu wechseln, mit wenigstens einer Kathode (1, 2) und einer Anode (7, 8), wobei wenigstens eine dieser Elektroden wenigstens teilweise aus einem durchsichtigen oder lichtdurchlässigen, eine elektrisch leitende Beschichtung (2, 7) tragenden Substrat besteht, und mit einer elektrolytischen Lösung (4), welche zwischen diesen Elektroden angeordnet ist, sowie mit einem elektrischen Stromkreis der über Anschlüsse (9) die genannten Kathode und Anode verbindet, **dadurch gekennzeichnet, dass** die Anode eine Beschichtung (6) trägt, welche aus wenigstens einer Schicht wenigstens eines nanokristallinen halbleitenden Materials mit einem Rauhigkeitsfaktor von wenigstens 20 besteht, an dessen Oberfläche eine Einzelschicht elektroaktiver Moleküle adsorbiert ist, welche die Eigenschaft aufweisen, im reduzierten Zustand farblos und im oxidierten Zustand farbig zu sein, und dass die Vorrichtung wenigstens eine zusätzliche elektroaktive Substanz enthält, welche die Eigenschaft aufweist, reversibel oxydierbar oder reduzierbar zu sein.

3. Elektrochrome Vorrichtung gemäss Anspruch 1, **dadurch gekennzeichnet, dass** ein lichtstreuender Reflektor (3') auf der Seite der dem System inneren Oberfläche der Kathode angeordnet ist.

4. Elektrochrome Vorrichtung gemäss Anspruch 3, **dadurch gekennzeichnet, dass** der lichtstreuende Reflektor aus einer Schicht eines mikrokristallinen Metalloxyds, welche die innere Oberfläche der Kathode beschichtet, besteht.

5. Elektrochrome Vorrichtung gemäss Anspruch 1, **dadurch gekennzeichnet, dass** das genannte reversibel oxidierbare Metall Zink ist.

6. Elektrochrome Vorrichtung gemäss Anspruch 1, **dadurch gekennzeichnet, dass** die genannten elektroaktiven Moleküle aus wenigstens einem Typ von elektrochromophoren Molekülen bestehen, der wenigstens eine adsorbierbare Verbindungsgruppe und wenigstens eine elektrochromophore Gruppe aufweist.

7. Elektrochrome Vorrichtung gemäss Anspruch 6, **dadurch gekennzeichnet, dass** die genannten elektrochromophoren Gruppen zwischen einem N,N'-Dialkylbipyridinium und dem Diimid der Naphthalen- Tetrakarboxyl- 1,4,5,8-Säure ausgewählt sind, und dass die genannten Verbindungsgruppen zwischen den Carboxylat-, Salicylat-, Catecholat-, oder Phosphonatgruppen ausgewählt sind.

8. Elektrochrome Vorrichtung gemäss Anspruch 2, **dadurch gekennzeichnet, dass** die genannten elektroaktiven Moleküle aus wenigstens einem Typ elektrochromophorer Moleküle bestehen, der wenigstens eine adsorbierbare Verbindungsgruppe und wenigstens eine elektrochromophore Gruppe aufweist.

9. Elektrochrome Vorrichtung gemäss Anspruch 8, **dadurch gekennzeichnet, dass** die genannten elektrochromophoren Moleküle als elektrochromophore Gruppe eine Triarylamingruppe und, als adsorbierbare Verbindungsgruppe die Phosphonatgruppe aufweisen.

10. Elektrochrome Vorrichtung gemäss einem der Ansprüche 1 oder 2, **dadurch gekennzeichnet, dass** die genannte elektrolytische Lösung aus wenigstens einem flüssigen elektrochemisch inerten Salz besteht.

## Claims

1. Electrochromic device possessing the property of changing colour under the effect of an electric voltage, comprising at least one cathode (1, 2) and one anode (7, 8), at least one of these electrodes being constituted at least in part of a transparent or translucent substrate bearing an electrically conductive coating (2,7), and an electrolytic solution (4) arranged between these electrodes, and an electric circuit connecting by means of contacts (9) said cathode and anode, **characterised in that** the cathode bears a coating (3) constituted of at least one layer of at least one nanocrystalline semiconductive material, having a roughness factor equal to at least 20, on the surface of which is adsorbed a monolayer of electroactive molecules having the property of being colourless in the oxidised state and coloured in the reduced state, and **in that** the anode comprises a metal capable of being oxidised in a reversible manner, the oxidised form of said metal being soluble in the electrolytic solution.

2. Electrochromic device possessing the property of changing colour under the effect of an electric voltage, comprising at least one cathode (1, 2) and one anode (7, 8), at least one of these electrodes being constituted at least in part of a transparent or translucent substrate bearing an electrically conductive coating (2,7), and an electrolytic solution (4) arranged between these electrodes, and an electric circuit connecting by means of contacts (9) said cathode and anode, **characterised in that** the anode bears a coating (6) constituted of at least one layer of at least one nanocrystalline semiconductive material, having a roughness factor equal to at least 20, on the surface of which is adsorbed a monolayer of electroactive molecules having the property of being colourless in the reduced state and coloured in the oxidised state, and **in that** the device contains at least one auxiliary electroactive compound having the property of being capable of being oxidised or reduced in a reversible manner.

3. Electrochromic device according to claim 1, **characterised in that** a diffusive reflector (3') is placed on the side of the cathode facing the inside of the system.

4. Electrochromic device according to claim 3, **characterised in that** the diffusive reflector is constituted of a layer of a microcrystalline metallic oxide deposited on the inside face of the cathode.

5. Electrochromic device according to claim 1, **characterised in that** said metal being capable of being oxidised in a reversible manner is zinc.

6. Electrochromic device according to claim 1, **characterised in that** said electroactive molecules are constituted of at least one type of electrochromophoric molecules comprising at least one adsorbable attachment group and at least one electrochromophoric group.

7. Electrochromic device according to claim 6, **characterised in that** said electrochromophoric groups are selected from among N,N'-dialkylbipyridinium and the diimide of naphthalene-1,4,5,8-tetracarboxylic acid and **in that** said attachment groups are selected from among the carboxylate, salicylate, catecholate, or phosphonate groups.

8. Electrochromic device according to claim 2, **characterised in that** said electroactive molecules are constituted of at least one type of electrochromophoric molecules comprising at least one adsorbable attachment group and at least one electrochromophoric group.

9. Electrochromic device according to claim 8, **characterised in that** said electrochromophoric molecules comprise as an electrochromophoric group a triarylamine group, and, as an adsorbable attachment group, the phosphonate group.

10. Electrochromic device according to anyone of claims 1 or 2, **characterised in that** said electrolytic solution is constituted of at least one electrochemically inert liquid salt.
